# EUROPÄISCHE PATENTSCHRIFT

(11) **EP 1 536 141 B1**
(45) Veröffentlichungstag und Bekanntmachung des Hinweises auf die Patenterteilung: **14.06.2006**
(21) Anmeldenummer: 03027267.8
(22) Anmeldetag: 28.11.2003
(51) Int. Cl.: F04D 25/04, F02F 1/24, F02B 37/02, B22C 9/10, F02C 6/12

(54) **Gehäuse für Turbolader**
Turocharger casing
Carter pour un turbocompresseur

(43) Veröffentlichungstag der Anmeldung: 01.06.2005
(73) Patentinhaber: BorgWarner Inc., Auburn Hills, MI 48326-2872 (US)
(72) Erfinder: Claus, Hartmut, Rochester MI 48037 (US)
(74) Vertreter: Pautex Schneider, Nicole Véronique

(56) Entgegenhaltungen:
- EP-A- 1 170 478
- DE-A- 3 133 952
- DE-A- 19 822 874
- DE-C- 19 756 985

## Beschreibung

### Gebiet der Erfindung

Die Erfindung bezieht sich auf ein Gehäuse für Turbolader mit einem Rotorraum zur Aufnahme eines Turbinenrotors, welcher Rotorraum von einem Gehäusemantel umgeben ist, von dem aus ein Anschluß an mindestens eine Abgassammelleitung eines Verbrennungsmotors vorgesehen ist. Die Erfindung bezieht sich überdies auf ein Verfahren zum Herstellen eines solchen Gehäuses

### Hintergrund der Erfindung

Der Anschluß eines Turboladers an einen Verbrennungsmotor erfordert im allgemeinen einigen Montageaufwand, wobei der Anschluß im allgemeinen über Flansche erfolgt. Flansche aber tragen deutlich zum Gewicht der ganzen Anordnung bei, was sich - bei den heutigen Anstrengungen zur Verringerung des Gesamtgewichtes eines Fahrzeuges unangenehm bemerkbar macht.

### Kurzfassung der Erfindung

Es ist Ziel der Erfindung, ein Gehäuse für einen Turbolader zu schaffen, welches die oben beschriebenen Nachteile vermeidet. Erfindungsgemäß gelingt dies dadurch, daß nicht nur wenigstens ein Teil des Gehäuses des Turboladers, sondern auch die Abgassammelleitung und der Zylinderkopf gemeinsam in einem Stück gegossen sind.

Damit fallen einmal nicht nur die schweren Flansche weg, sondern es wird auch die Montagearbeit für den Anschluß von Turbogehäuse an die Abgassammelleitung und von dieser an den Zylinderkopf entfallen, was die Gestehungskosten günstiger gestaltet. Insbesondere entfällt auf diese Weise auch noch der ziemlich große Eingangsflansch zum Anschluß der Abgassammelleitung an den Zylinderkopf.

An sich sind im Rahmen der Erfindung die verschiedensten Ausgestaltungen möglich. Beispielsweise kann etwa nur der axial halbe Gehäusemantel eines Rotorraumes mindestens mit der Abgassammelleitung in einem Stück gegossen sein, so daß der jeweilige Rotor, z.B. der Turbinenrotor, gegebenenfalls aber alternativ oder zusätzlich der Kompressorrotor, von vorne in das halbe Gehäuse eingesetzt werden kann. In diesem Falle wäre es auch möglich, zusätzlich zum halben Rotorgehäuse auch noch das Lagergehäuse für die Rotorwelle mit in einem Stück zu gießen, ebenso wie es - etwa im Sinne der älteren Patentanmeldung EP 02 019 178.9 - denkbar wäre, mit mindestens der Abgassammelleitung auch sowohl das Lagergehäuse als auch je eine daran anschließende axiale Hälfte eines Rotorgehäuses in einem Stück zu gießen. Ein weiterer änlicher Turbelader ist aus DE 3133952A1 bekannt. Eine besonders bevorzugte Lösung unter all diesen Möglichkeiten besteht darin, daß der wenigstens eine Teil des Gehäuses den Turbinenrotorraum des Turboladers zumindest teilweise umgibt. Denn dadurch wird eine ununterbrochene wärmeleitende Verbindung mindestens vom Zylinderkopf her geschaffen, welche dafür sorgt, daß die Wärmeverluste auf dem Weg zum Turbolader möglichst gering sind. Dies ist deshalb wichtig, weil gerade beim Start eines Fahrzeuges der Katalysator noch kalt und daher kaum wirksam ist, und erst durch die Abgase aufgewärmt werden muß. Durch die einstückige Gußausbildung aber, erfolgt ein ungestörter Wärmeübergang mindestens ab dem Zylinderkopf, was für eine rasche Aufheizung des Katalysators sorgt. Dazu wird damit auch das Kaltstartverhalten verbessert. Ein weiterer Vorteil liegt darin, daß mit dem Wegfall von Flanschverbindungen auch Dichtheitsprobleme beseitigt sind, denn Flanschverbindungen sind in Bezug auf Emissionen heikel.

Wenn, wie bevorzugt, der wenigstens eine Teil des Gehäuses des Turboladers, die Abgassammelleitung und der Zylinderkopf gemeinsam aus einem Leichtmetall, wie Aluminium, gegossen sind, so reduziert sich das Gewicht noch weiter, wobei damit nicht nur der Zylinderkopf aus einem Leichtmetall - wie Aluminium, gegebenenfalls aber auch wenigstens teilweise aus Magnesium - besteht (wie das heute schon mit Al-Zylinderköpfen der Fall ist), sondern auch der mindestens teilweise Gehäusemantel des Turboladers. Im Falle eines so gut wärmeleitenden Metalles kann man sogar eine Kühlung des Gehäuses ins Auge fassen.

Es ist klar, daß sich die Fachwelt nicht umsonst bisher davor gescheut hat, an ein so kompliziertes Gußstück auch nur zu denken. Die Herstellung erfolgt aber erfindungsgemäß vorteilhaft so, daß Sand-Kernteile für einen Teil des Gehäuses des Turboladers mit Sand-Kernteilen für die Hohlräume einer Abgassammelleitung und diese wiederum mit Sand-Kernteilen für den Zylinderkopf zusammengefügt und miteinander verbunden und anschließend in Kokillenteile für den Teil des Gehäuses des Turboladers, für die Abgassammelleitung und den Zylinderkopf eingebracht werden, worauf flüssiges Metall in die Kokillenteile eingefüllt und erstarren gelassen wird, worauf man Turboladergehäuseteil, Abgassammler und Zylinderkopf entformt und die Kernteile entfernt.

### Kurzbeschreibung der Zeichnungen

Weitere Einzelheiten der Erfindung ergeben sich aus der nachfolgenden Beschreibung eines in der Zeichnung dargestellten Ausführungsbeispieles. Es zeigen:
- Fig. 1: eine Perspektivansicht einer erfindungsgemäß ausgeführten Einheit aus Abgassammler und (strich-punktiert angedeutetem) Zylinderkopf eines Verbrennungsmotors mit einem Turbinengehäuse und einer angeschlossenen Ventilkammer eines sogenannten "waste-gates" eines Turboladers; und
- Fig. 2: Eine Perspektivdarstellung des Kernaufbaues zum Herstellen einer erfindungsgemäßen Einheit.

### Detaillierte Beschreibung der Zeichnung

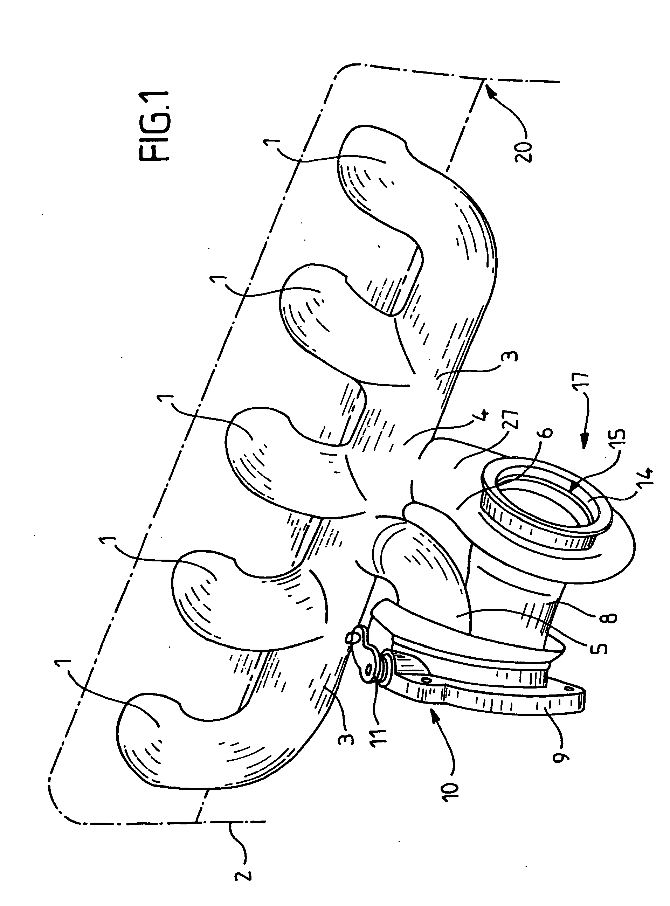

Aus einem in Fig. 1 lediglich strich-punktiert angedeuteten Zylinderkopf 20 eines Verbrennungsmotors 2 an sich beliebiger Konstruktion führen fünf Abgaskrümmer 1 jeweils zu einem Sammelrohr 3 oder Abgassammler. An einem Anschluß-Teilbereich 4 ist dann einerseits ein Turbinengehäuse 17 und anderseits an die Ventilkammer eines Bypass-Ventiles 10 zur Umgehung des Turbinengehäuses 17 angeschlossen und integral, d.h. in einem Stück, mit dem Abgassammler 3 und dem Zylinderkopf 20 gegossen. Es ist klar, daß dies nur ein Beispiel darstellt und die Erfindung nicht auf eine bestimmte Anzahl von Abgaskrümmern 1 oder auf das Gießen der genannten Teile 10, 17 des Turboladers beschränkt ist.

Der Anschluß-Teilbereich 4 stellt die Verbindung zwischen Abgassammler 3 und einem Turbinengehäuse 17 her. Im Anschluß-Teilbereich 4 endet auch der mittlere Abgaskrümmer 1 (es könnte aber auch jeder andere Abgaskrümmer, wie etwa einer am Ende des Abgassammlers sein). Alle diese Teile sind vorzugsweise Feingußteile.

Wie erwähnt, kann eine weitere Verbindung aus dem Anschluß-Teilbereich 4 zu einem Bypasskanal 5 gehen, über den wenigstens ein Teil des Abgases des unter dem Zylinderkopf 20 gelegenen Verbrennungsmotors 2 über eine mittels eines Hebels 11 betätigbaren Klappe 10 als Bypassventil (der Pfeil zeigt nur den Ort dieser Klappe an) einem weiteren Verwender, wie etwa dem Katalysator, zuführbar ist. Dabei ist ersichtlich, daß der Hebel 11 an einer in einem Flansch 9 gelagerten Welle befestigt ist, an welchen Flansch 9 ein Auslaßkanal 8 aus dem Turbinengehäuse 17 anschließt und mit ihm ebenfalls in einem Stück gegossen sein kann, wobei natürlich beim Gießen ein Kern für den mitzugießenden Auslaßkanal 8 vorzusehen ist. Eine spezielle Buchse, die - wie beim Stand der Technik - für die Unterbringung der Klappe bei 10 sowie ihre Betätigungswelle mit dem Hebel 11 dient, kann dann entfallen, wenn auch das zugehörige Klappenventilgehäuse (hier Flansch 9) mitgegossen wird. Allerdings sei darauf hingewiesen, daß es im Falle des Gießens aus Magnesium an sich bekannt ist, das Gußstück mit Aluminiumauskleidungen zu versehen; diese Technik kann auch bei der vorliegenden Erfindung eingesetzt werden.

Das Turbinengehäuse 17 ist, wie üblich, etwa spiralförmig ausgebildet, um so das Abgas einer in der Mitte der Spirale gelegenen und in den Gehäusemantel 17 und in einen Rotorraum 15 eingesetzten Turbine zuzuführen. Der Gehäusemantel 17 umgibt in üblicher Weise mindestens teilweise den Rotorraum 15, in welchem sich der Turbinenrotor dreht. Wenn dabei von "mindestens teilweise" die Rede ist, so ist damit gemeint, daß es möglich wäre, auf das Mitgießen des Bypass-Teiles 5, 10 zu verzichten, nach dessen Seite die axiale Hälfte des Turbinengehäuses 17 offen zu lassen (um den Turbinenrotor einzusetzen) und beispielsweise dafür an der in Fig. 1 rechten Seite mindestens das Lagergehäuse, gegebenenfalls aber auch das halbe Kompressorgehäuse mitzugießen. Im vorliegenden Fall ist zum Anschluß des hier nicht dargestellten Lagergehäuses ein Lagergehäuseflansch 14 vorgesehen, der am Gehäusemantel 17 angegossen ist.

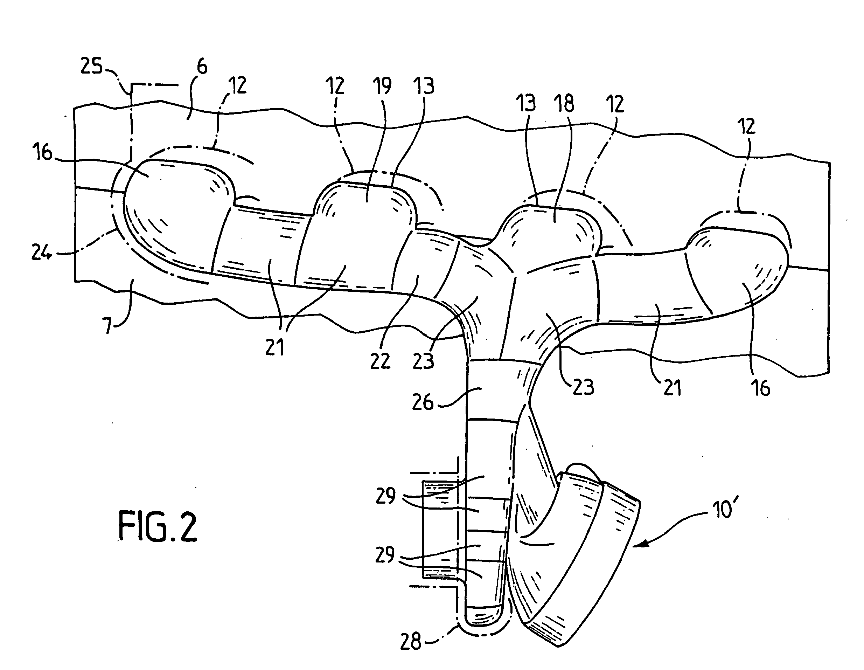

Nachfolgend wird die Herstellung einer der Konstruktion nach Fig. 1 ähnlichen Ausführungsform unter Bezugnahme auf die Fig. 2 erläutert. Diese zeigt in an sich bekannter Weise eine - hier teilweise dargestellte - obere Kokille 6 und eine untere Kokille 7 für den Zylinderkopf 20, wobei diese Kokillen etwa in der Weise ausgebildet sein können, wie dies aus dem rororo-Techniklexikon, Rowohlt-Verlag, 1972, S. 523, bekannt ist. Dementsprechend sind innerhalb der Kokillen 6, 7 strich-punktiert angedeutete Sandkerne 12, sogenannte Hot-Box-Kerne, vorgesehen. Diese Sandkerne 12 sind jedoch, im Gegensatz zum Stand der Technik, nicht in den Kokillen 6, 7 eingeschlossen, sondern durchdringen Öffnungen 13 derselben, um mit weiteren, außerhalb der Kokillen 6, 7 gelegenen Sandkernen 16, 18, 19 mit Hilfe von Bindemittel, wie Wasserglas, verbunden zu werden. Diese weiteren Sandkerne 16, 18, 19, zusammen mit Sandkernen 21-23 formen den Hohlraum des Abgassammlers 3 (Fig. 1), dessen die Sandkerne 16, 18, 19 und 21-23 umgebende Kokille 24 strichpunktiert dargestellt ist und einen Anschlußteil 25 aufweist, der sich etwa parallel zur oberen Kokille 6 erstreckt und so mit dieser leicht fest verbunden werden kann.

Alle genannten Sandkerne 12, 16, 18, 19 und 21-23 sind in der schon erwähnten Art durch Bindemittel miteinander verbunden, um so die recht komplizierte Innenform des zu gießenden Gehäuses mit Zylinderkopf und Abgassammler in einem Stück zu bilden. Dabei ist besonders auf den Stoß der Kerne 18 und 23 hinzuweisen, von denen die ersteren zum Gehäuse eines in Fig. 2 darunter ersichtlichen Turboladers hinleiten. Denn anschliessend an die beiden Kerne 23 ist ein verbindender Kern 26 mit diesen verbunden, der den Zulaufkanal zum Turbinengehäuse bildet, und an den weitere rund um den Rotorraum 15 (Fig. 1) des Turbinengehäusemantels 17 angeordnete Sandkerne 27, jeweils durch Bindemittel zu einem festen Gebilde verbunden, anschließen. Diese Sandkerne 27 werden von einer mit den übrigen Kokillen 6, 7 und 24 fest verbundenen Turbinenkokille 28 umgeben, so daß sich allenthalben die erforderlichen Hohlräume zwischen den Kokillen und den Sandkernen bilden, um das zu vergießende Metall, z.B. ein Leichtmetall, wie Aluminium, einzufüllen. In Fig. 2 sind auch die hier allgemein mit 10' bezeichneten Kerne für das aus Fig. 1 ersichtliche Bypass-Ventilgehäuse 10 zu sehen.

Nach dem Ausgießen der Hohlräume zwischen den Sandkernen und den Kokillen läßt man das Metall erstarren, entformt dann das Ganze und entfernt in an sich bekannter Weise die Sandkerne.

Im Rahmen der Erfindung sind - wie bereits oben erwähnt - die verschiedensten Ausgestaltungen möglich. Beispielsweise könnte aber der Gehäusemantel 17 des Turboladers auch mit mehr als einer Abgassammelleitung verbunden werden.

### Bezugszeichenliste

- 1: Abgasrohrbögen
- 3: Abgassammler
- 5: Bypasskanal
- 7: untere Kokille f. 20
- 9: Flansch
- 11: Hebel
- 13: Kokillenöffnung
- 15: Rotorraum
- 17: Turbinengehäusemantel
- 19: Sandkern v. 3
- 21: Sandkern v. 3
- 23: Sandkern v. 3
- 25: Anschlußteil v. 24
- 27: Anschlußstück 17-3
- 29: Sandkerne v. 17
- 2: Verbrennungsmotor
- 4: Anschluß-Teilbereich
- 6: obere Kokille f. 20
- 8: Auslaßkanal v. 17
- 10: Bypass-Ventil-, Klappen-Kammer
- 12: Sandkerne v. 20
- 14: Lagergehäuseflansch
- 16: Sandkern v. 3
- 18: Sandkern v. 3
- 20: Zylinderkopf
- 22: Sandkern v. 3
- 24: Kokille f. 3
- 26: Sandkern
- 28: Kokille f. 17

## Patentansprüche

1. Gehäuse für Turbolader mit einem
von einem Gehäusemantel (17) umgebenen Rotorraum (15), von dem aus ein Anschlußstück (27) an mindestens eine Abgassammelleitung (3) eines Verbrennungsmotors (2) vorgesehen ist;
**dadurch gekennzeichnet, daß**
nicht nur wenigstens ein Teil (10, 17) des Gehäuses des Turboladers, und die Abgassammelleitung (3) sondern auch der Zylinderkopf (20) gemeinsam in einem Stück gegossen sind.

2. Gehäuse nach Anspruch 1, **dadurch gekennzeichnet, daß** der wenigstens eine Teil (10, 17) des Gehäuses den Turbinenrotorraum (15) des Turboladers zumindest teilweise umgibt.

3. Gehäuse nach einem der vorhergehenden Ansprüche, **dadurch gekennzeichnet, daß** der wenigstens eine Teil (10, 17) des Gehäuses eine Bypass-Ventilkammer (10) aufweist.

4. Gehäuse nach einem der vorhergehenden Ansprüche, **dadurch gekennzeichnet, daß** der wenigstens eine Teil (10, 17) des Gehäuses des Turboladers, die Abgassammelleitung (3) und der Zylinderkopf (20) gemeinsam aus einem Leichtmetall, wie Aluminium, gegossen sind.

5. Verfahren zum Herstellen eines Gehäuses nach einem der vorhergehenden Ansprüche, bei dem Sand-Kernteile (10', 29) für einen Teil (10, 17) des Gehäuses des Turboladers mit Sand-Kernteilen (16, 18, 19, 21-23) für die Hohlräume einer Abgassammelleitung (3) und diese wiederum mit Sand-Kernteilen (12) für den Zylinderkopf (20) zusammengefügt und miteinander verbunden und anschließend in Kokillenteile (6, 7, 28) für den Teil (10, 17) des Gehäuses des Turboladers, für die Abgassammelleitung (3) und den Zylinderkopf (20) eingebracht werden, worauf flüssiges Metall in die Kokillenteile (6, 7, 28) eingefüllt und erstarren gelassen wird, und daß man dann Turboladergehäuseteil (10, 17), Abgassammler (3) und Zylinderkopf (20) entformt und die Kernteile (10', 16, 18, 19, 21-23, 26, 29) entfernt.

## Claims

1. A housing for a turbocharger comprising a rotor space (15) surrounded by a housing shell (17), from which a connection piece (27) is provided on at least one manifold (3) of a combustion engine (2)
**characterized in that**
not only at least part (10, 17) of the housing shell of the turbocharger, and said manifold, but also said cylinder head (20) are integrally cast as one piece.

2. Housing as claimed in claim 1, **characterized in that** the at least one part (10, 17) of said housing surrounds said turbine rotor space (15) of said turbocharger at least partially.

3. Housing as claimed in anyone of the preceding claims, **characterized in that** the at least one part (10, 17) of said housing comprises a by-pass valve chamber (10).

4. Housing as claimed in anyone of the preceding claims, **characterized in that** the at least one part (10, 17) of said housing of the turbocharger, the manifold (3) and the cylinder head (20) are integrally cast from a light metal, such as aluminum.

5. A method for manufacturing a housing as claimed in any of the preceding claims, wherein sand cores (10', 29) for part (10, 17) of a housing shell of said turbocharger are joint and bonded with sand cores (16, 18, 19, 21-23) for shaping the cavities of said manifold (3), and these, in turn, with sand cores (12) for shaping said cylinder head (20); and are, thereafter inserted into respective molds (6, 7, 28) for said part (10, 17) of the housing of said turbocharger, for said manifold (3) and said cylinder head (20); after which molten metal is poured into said molds (6, 7, 28) and allowed to solidify,
and thereafter said part of said housing shell (10, 17), manifold (3) and cylinder head (20) are demolded and said sand cores (10', 16, 18, 19, 21-23, 26, 29) are removed.

## Revendications

1. Carter pour un turbocompresseur de suralimentation, comprenant :
un espace de rotor (15) entouré par une enveloppe de carter (17), dont une pièce de raccordement (27) est prévue sur au moins une tuyauterie de collecte de gaz d'échappement (3) d'un moteur à combustion interne (2),
**caractérisé en ce que**,
non seulement une partie (10, 17) du carter du turbocompresseur de suralimentation et la tuyauterie de collecte de gaz d'échappement (3), mais également la culasse (20) sont moulées conjointement d'une seule pièce.

2. Carter selon la revendication, **caractérisé en ce que** la au moins une partie (10, 17) du carter entoure, au moins partiellement, l'espace de rotor de turbine (15) du turbocompresseur de suralimentation.

3. Carter selon l'une des revendications précédentes, **caractérisé en ce que** la au moins une partie (10, 17) du carter présente une chambre à soupape de dérivation (10).

4. Carter selon l'une des revendications précédentes, **caractérisé en ce que** la au moins une partie (10, 17) du carter du turbocompresseur de suralimentation, la tuyauterie de collecte de gaz d'échappement (3) et la culasse (20) sont moulées conjointement en un métal léger, tel que de l'aluminium.

5. Procédé de fabrication d'un carter selon l'une des revendications précédentes, dans lequel des parties de noyau en sable (10', 29), pour une partie (10, 17) du carter du turbocompresseur de suralimentation, sont jointoyées et reliées ensemble avec des parties de noyau en sable (16, 18, 19, 21 à 23), pour les espaces creux d'une tuyauterie de collecte de gaz d'échappement (3) et celles-ci, de nouveau, sont jointoyées et reliées ensemble avec des parties de noyau en sable (12) pour la culasse (20), et, ensuite, introduites dans des parties de coquille (6, 7, 28) pour la partie (10, 17) du carter du turbocompresseur de suralimentation, pour la tuyauterie de collecte de gaz d'échappement (3) et la culasse (20), suite à quoi du métal liquide est introduit dans les parties de coquille (6, 7, 28) et est laissé se solidifier, et en ce que, ensuite, on démoule la partie de carter de turbocompresseur de suralimentation (10, 17), le collecteur de gaz d'échappement (3) et la culasse (20) et l'on enlève les parties de noyau (10', 16, 18, 19, 21 à 23, 26, 29).
